# EUROPÄISCHE PATENTANMELDUNG

(11) **EP 1 933 118 A2**
(43) Veröffentlichungstag der Anmeldung: **18.06.2008**
(21) Anmeldenummer: 07022252.6
(22) Anmeldetag: 16.11.2007
(51) Int. Cl.: G01G 19/04, G01G 3/12

(54) **Kraftmessvorrichtung**

(30) Priorität: 16.12.2006 DE 102006059896
(71) Anmelder: Schenck Process GmbH, 64293 Darmstadt (DE)
(72) Erfinder: Müller, Klaus, 64521 Gross-Gerau (DE)
(74) Vertreter: Blumbach - Zinngrebe

(57) **Zusammenfassung**

Beschrieben wird eine Kraftmessvorrichtung mit einem Krafteinleitungsteil, welches über Verformungskörper mit wenigstens einem Kraftausleitungsteil verbunden ist, wobei das Krafteinleitungsteil an einem oberen Abschnitt mit Mitteln zum Festlegen eines Kraftgebers versehen ist und das Kraftausleitungsteil Verankerungselemente zum Verankern auf einem Untergrund aufweist. Um einen einfacheren und weniger Raum beanspruchenden Einbau der Kraftmessvorrichtung unter einer Schiene zu ermöglichen, ist vorgesehen, dass neben einem unteren Abschnitt des Krafteinleitungsteils zwei Kraftausleitungsteile angeordnet sind, und zwar an jeder von zwei gegenüberliegenden Seiten des unteren Abschnittes je ein Kraftausleitungsteil, wobei jedes Kraftausleitungsteil über zwei parallele und seitlich beabstandete Verformungskörper mit dem unteren Abschnitt sowie durch ein massives Verbindungsstück mit dem gegenüberliegenden Kraftausleitungsteil verbunden ist.

## Beschreibung

Die Erfindung betrifft eine Kraftmeßvorrichtung mit einem Krafteinleitungsteil, welches über Verformungskörper, an denen elektromechanische Wandler angebracht sind, mit wenigstens einem Kraftausleitungsteil verbunden ist, wobei das Krafteinleitungsteil an einem oberen Abschnitt mit Mitteln zum Festlegen eines Kraftgebers versehen ist und das Kraftausleitungsteil Verankerungselemente zum Verankern auf einem Untergrund aufweist.

Aus dem Dokument EP 1 212 228 B1 ist eine Vorrichtung zur Erfassung der Schienenbelastung durch überfahrende Schienenfahrzeugräder bekannt, bei der in Meßschwellen quer zur Schienenrichtung Kraftaufnahmer eingelassen sind, auf denen sich die Schienen abstützen. Diese Kraftaufnehmer sind mit ihrem Krafteinleitungsteil fest mit der Schiene und mit ihrem Kraftausleitungsteil fest mit der Schwelle verbunden. Außerdem sind Kraftrückführungselemente vorgesehen, die die Kraft in einen mit Dehnungsmeßstreifen versehenen Dehnungskörper einleiten. Diese Vorrichtung ist unter anderem darin nachteilig, dass für ihren Einbau unter die Schiene besondere Maßnahmen am Gleisbett vorgenommen werden müssen.

In der deutschen Patentschrift 39 37 318 ist eine Kraftmeßvorrichtung in Form einer Wägezelle beschrieben, bei der ein plattenförmiger Meßkörper zwei konzentrische Verformungsringe mit einer in den Meßkörper eingeleiteten Kraft beaufschlagt. Die Verformungsringe stützen sich radial außen auf Pfosten ab, über welche die Kraft in eine Basisplatte ausgeleitet wird. An den Verformungsringen sind Dehnungsmeßstreifen angebracht. Wenn diese Wägezelle für die Erfassung einer Schienenbelastung benutzt werden soll, ist ein bestimmter Mindestabstand zwischen Schiene und Schwelle erforderlich, um einen unbehinderten Einbau der Wägezelle zu gewährleisten. Außderdem erschweren die Verformungsringe mit seitlichen Pfosten den Einbau der Vorrichtung mit vorhandenen Mitteln.

Bei der Kraftmeßvorrichtung nach deutscher Patentschrift 10 2004 017 613 sind zur Erfassung einer Schienenbelastung übereinander eine Krafteinleitungsplatte, auf welcher eine Schiene quer zu befestigen ist, und eine auf dem Gleisbett festzulegende Kraftausleitungsplatte vorgesehen, die außen beiderseits mit je einem abwärts und einwärts gebogenen, Dehnungsmeßstreifen tragenden Verformungskörper verbunden sind. Zwischen Krafteinleitungs- und Kraftausleitungsplatte ist ein schmaler Luftspalt gelassen, den die beiden Verformungskörper überbrücken. Für den Einbau einer derartigen Kraftmeßvorrichtung unter einer Schiene ist eine spezielle Hohlschwelle zur Aufnahme der Kraftmeßvorrichtung erforderlich, was das Erbringen zusätzlichen Aufwands bedingt.

Der Erfindung liegt daher die Aufgabe zugrunde, bei der eingangs genannten Kraftmeßvorrichtung Maßnahmen vorzusehen, die einen einfacheren und weniger Raum beanspruchenden Einbau unter einer Schiene erlauben.

Dazu dient eine Kraftmeßvorrichtung mit einem Krafteinleitungsteil, welches über Verformungskörper, an denen elektromechanische Wandler angebracht sind, mit wenigstens einem Kraftausleitungsteil verbunden ist, wobei das Krafteinleitungsteil an einem oberen Abschnitt mit Mitteln zum Festlegen eines Kraftgebers versehen ist und das Kraftausleitungsteil Verankerungselemente zum Verankern auf einem Untergrund aufweist, wobei erfindungsgemäß neben einem unteren Abschnitt des Krafteinleitungsteils zwei Kraftausleitungsteile vorgesehen sind, und zwar an jeder von zwei gegenüberliegenden Seiten des unteren Abschnittes je ein Kraftausleitungsteil, wobei jedes Kraftausleitungsteil über zwei seitlich beabstandete und parallele Verformungskörper mit dem unteren Abschnitt sowie durch ein massives Verbindungsstück mit dem gegenüberliegenden Kraftausleitungsteil verbunden ist.

Die Erfindung bringt zunächst den Vorteil einer sehr geringen Bauhöhe, was durch die Nebeneinander-Anordnung von Krafteinleitungsteil, Verformungskörper und Kraftausleitungsteil erreicht wird, so dass diese Teile sich etwa auf gleicher Höhe befinden. Diese Eigenschaft der Erfindung erlaubt ihren bevorzugten Einsatz zur Erfassung von statischen und dynamischen Schienenbelastungen. Für den Einbau der Erfindung unter einer Schiene kann es genügen, eine seitens der Bahnverwaltung üblicherweise verwendete Rippenplatte durch die erfindungsgemäße Kraftmeßvorrichtung zu ersetzen, weil der tatsächliche Höhenunterschied zwischen der Kraftmeßvorrichtung und einer Rippenplatte nur etwa 50 mm beträgt. Eine Anpassung am Unterbau des Schienenbettes ist daher nicht erforderlich. Die gängigen Gleisbaumaschinen (Stopfmaschinen) müssen für den Einbau der Erfindung nicht umgerüstet werden. Zur Schienen- und Schwellenbefestigung können weitgehend übliche Standartbauteile benutzt werden.

Ferner lässt sich die Erfindung mit geringen Fertigungskosten und minimalem Montageaufwand herstellen.

Die Erfindung ermöglicht mehrere Ausführungsformen. So empfiehlt sich eine Gestaltung, bei der das Verbindungsstück sich mit seitlichem Abstand neben dem unteren Abschnitt erstreckt. Hierbei ergibt sich eine sehr kompakte äußere Form der Erfindung, die einen im wesentlichen rechteckigen Umriß einer die beiden Kraftausleitungsteile umfassenden Grundplatte ermöglicht, bei der zwischen den Kraftausleitungsteilen das Verbindungsstück sowie der untere Abschnitt ineinander greifen, ohne sich allerdings zu berühren. Zweckmäßig entspricht der Umriß den Abmessungen einer an sich bekannten Rippenplatte, wobei es sich empfiehlt, die Lage der Verankerungselemente derjenigen der Befestigungselemente anzupassen, die an einer Rippenplatte vorhanden sind.

Weiterhin kommt als Ausführungsform der Erfindung in Betracht, dass das Verbindungsstück zwei massive Verbindungsstege aufweist, zwischen denen sich der untere Abschnitt mit seitlichem Abstand erstreckt. Die Verbindungsstege begrenzen damit die Kraftmeßvorrichtung seitlich außen. Alternativ kann der untere Abschnitt zweiteilig sein, wobei die beiden Teile desselben mit den Kraftausleitungsteilen über die Verformungskörper verbunden sind und das Verbindungsstück seitlich mit Abstand umgeben. Bei dieser Ausführungsform begrenzen die beiden Teile des unteren Abschnittes die Kraftmeßvorrichtung seitlich außen.

Zweckmäßig entspricht die Höhe der Kraftmeßvorrichtung derjenigen einer üblichen Rippenplatte. Weiterhin ist vorteilhaft, wenn der obere Abschnitt des Krafteinleitungsteils mit dem unteren Abschnitt lösbar verbunden, insbesondere verbolzt ist. Je nach den Vorgaben der Bahnverwaltung, bei deren Gleisanlagen die Erfindung eingesetzt werden soll, können unterschiedliche Mittel zur Schienenbefestigung auf dem Krafteinleitungsteil erforderlich sein, die auf einem entsprechend angepaßten Krafteinleitungsteil realisiert sind. Die Lösbarkeit der Verbindung von Krafteinleitungsteil vom unteren Abschnitt ermöglicht hierzu einen Austausch der Krafteinleitungsteile.

Eine besonders einfache Herstellung der Erfindung wird dann möglich, wenn die erfindungsgemäße Kraftmeßvorrichtung aus einem einzigen Stahlblock etwa durch Fräsen und/oder Bohren hergestellt ist. Ein aufwändiges Erodieren ist nicht erforderlich. Jedenfalls erweist es sich als zweckmäßig, wenn wenigstens der untere Abschnitt mit den Verformungskörpem und Kraftausleitungsteilen einteilig sind. Im Übrigen sind zweckmäßige Ausgestaltungen der Erfindung in den beigefügten Unteransprüchen angegeben.

Die Erfindung wird nachstehend anhand der beigefügten Zeichnung mit im Einzelnen beschriebenen Beispielen erläutert. Es zeigen:
Figur 1: eine schematische Seitenansicht einer ersten Ausführungsform einer erfindungsgemäßen Kraftmeßvorrichtung;
Figur 2: eine schematische perspektivische Ansicht von schräg oben der Vorrichtung nach Figur 1;
Figur 3: eine schematische perspektivische Ansicht von schräg unten der Vorrichtung nach Figur 1, aus welcher etwa ein Viertel vertikal herausgeschnitten ist;
Figur 4: eine schematische vergrößerte Darstellung eines Ausschnittes aus Figur 3;
Figur 5: eine schematische Stirnansicht der Vorrichtung aus Figur 1;
Figur 6: eine schematische, der Figur 2 ähnliche Ansicht einer zweiten Ausführungsform der erfindungsgemäßen Kraftmeßvorrichtung;
Figur 7: eine schematische der Figur 6 ähnliche Ansicht, bei der etwa ein Viertel der Vorrichtung vertikal abgeschnitten ist;
Figur 8: eine schematische perspektivische Ansicht von schräg unten der Vorrichtung nach Figur 6, die unten hälftig aufgeschnitten ist;
Figur 9: eine schematische vergrößerte Darstellung einer Einzelheit aus Figur 8;
Figur 10: eine schematische perspektivische Ansicht von schräg unten der Vorrichtung nach Figur 6, von der eine Hälfte vertikal abgeschnitten ist; und
Figur 11 eine schematische Ansicht der Vorrichtung nach Figur 6 von unten hälftig aufgeschnitten.

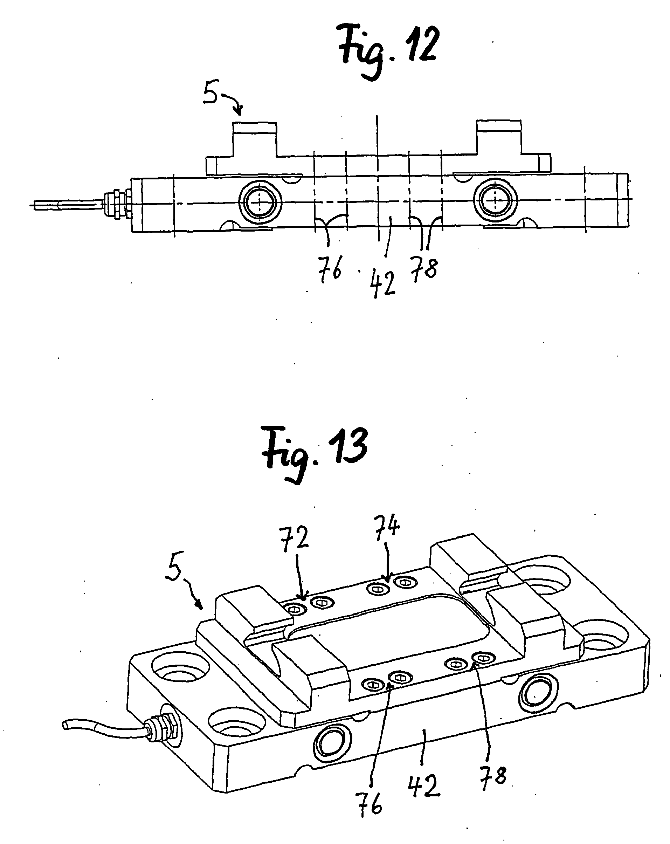

Figur 12: eine schematische Seitenansicht einer dritten Ausführungsform der erfindungsgemäßen Kraftmeßvorrichtung;
Figur 13: eine schematische, der Figur 2 ähnliche Ansicht der dritten Ausführungsform gemäß Figur 12;
Figur 14: eine schematische, der Figur 13 ähnliche Darstellung, bei der der obere Abschnitt des Krafteinleitungsteils teilweise weggeschnitten ist, und;
Figur 15: eine schematische Stirnansicht der teilweise vertikal aufgeschnittenen Vorrichtung nach Figur 13.

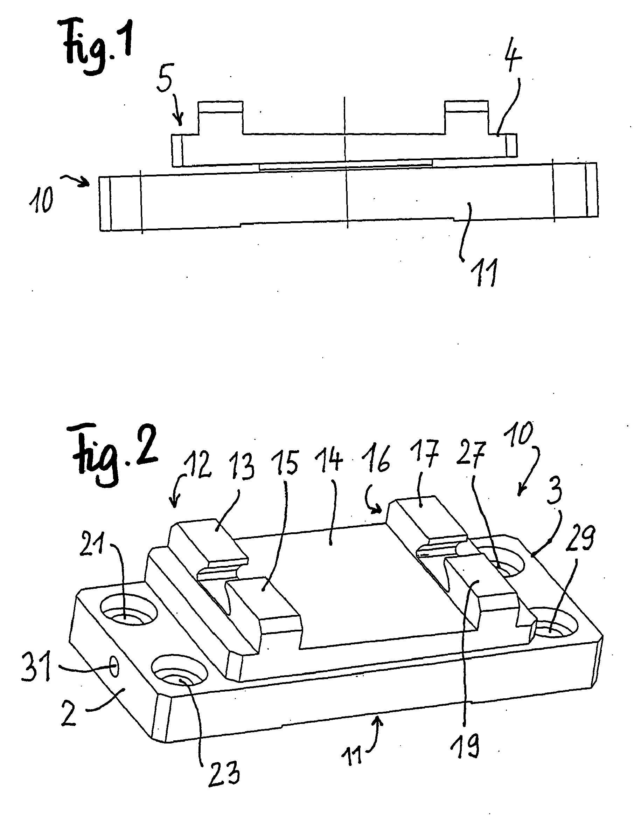

Die im Ganzen mit 10 bezeichnete Kraftmeßvorrichtung weist gemäß Figuren 1-5 eine rechteckige Grundplatte 11 auf, die längs ihrer gegenüberliegenden Schmalseiten je eine Montageleiste 2, 3, von denen jede als ein Kraftausleitungsteil wirkt, besitzt. Die beiden Kraftausleitungsteile 2, 3 sind durch zwei Verbindungsstege 7, 9, verbunden, welche parallel zueinander längs der Längserstreckung der Grundplatte 11 verlaufen und deren äußere Begrenzung bilden. Nach innen sind die beiden Verbindungsstege 7, 9 durch je eine Langnut 8, 18 zu einem innenliegenden unteren Abschnitt 6 eines Krafteinleitungsteils 5 beabstandet. Das Krafteinleitungsteil 5 besitzt des Weiteren einen plattenförmigen oberen Abschnitt 4, der die Kraftausleitungsteile 2, 3 teilweise überragt und auf seiner Oberseite Mittel zur Festlegung eines Kraftspenders trägt, der im gezeigten Ausführungsbeispiel eine nicht dargestellte Schiene ist. Die Mittel umfassen einerseits zwei Paare 12, 16 von jeweils zwei einander gegenüber liegenden Böcken 13, 15 und 17, 19, sowie andererseits eine sich zwischen den Paaren erstreckende Auflagefläche 14, auf welcher eine Schiene quer zur Längserstreckung der Grundplatte 11 durch nicht dargestellte und an den Böcken 13,15,17,19 verankerte Federbügel fixiert werden kann.

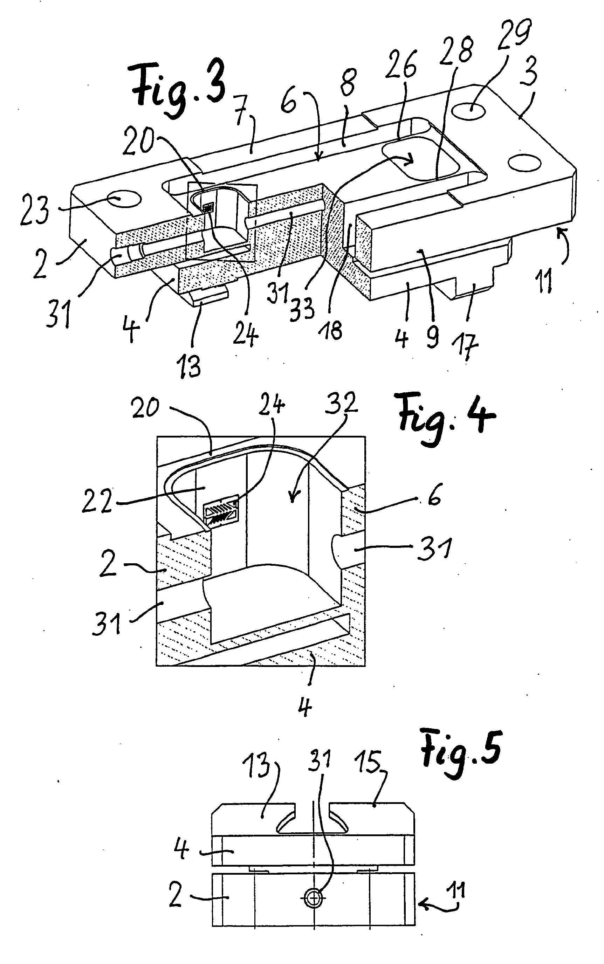

Der untere Abschnitt 6 ist um die Breite der Langnuten 8, 18 von dem jeweiligen Verbindungssteg 7, 9 beabstandet. An den auf die Kraftausleitungsteile 2, 3 zuweisenden Stirnseiten des unteren Abschnittes 6 ist letzterer durch jeweils zwei Verformungskörper mit den zugehörigen Kraftausleitungsteilen 2, 3 verbunden, von denen in Figur 3 lediglich der dem Verbindungssteg 7 benachbarte und in das Kraftausleitungsteil 2 mündende Verformungskörper 20 dargestellt ist. In seinem Übergang vom unteren Abschnitt 6 zum Kraftausleitteil 2 besitzt der Verformungskörper 20 einen dünnen, membranartigen Wandabschnitt 22 parallel zur Langnut 8, auf dessen vom Verbindungssteg 7 wegweisender Innenfläche ein elektromechanischer Wandler 24 in Form von zwei gegensinnig unter etwa 45° orientierten Dehnungsmeßstreifen auf einem Träger aufgebracht ist. Die zugehörigen elektrischen Signalleitungen sind nicht dargestellt.

Die auf das Kraftausleitungsteil 3 zuweisende Stirnseite des unteren Abschnittes 6 ist entsprechend über zwei parallele und quer zu den Verbindungsstegen 7, 9 beabstandete Verformungskörper 26, 28 mit dem Kraftausleitungsteil 3 verbunden. Jeder der beiden Verformungskörper 26, 28 weist ebenso wie der Verformungskörper 20 einen dünnen membranartigen Wandabschnitt auf, dessen Innenseite mit je einem elektromechanischen Wandler in Form der oben erwähnten Dehnungsmeßstreifen versehen ist.

Wie aus Figur 3 ersichtlich taucht der untere Abschnitt 6 des Krafteinleitungsteils 4 vollständig zwischen die beiden endständigen Kraftausleitungsteile 2, 3 ein, so dass die Gesamtstärke der Kraftmeßvorrichtung 10 etwa gleich der Summe der Stärken des unteren Abschnittes 6 plus der Stärke des oberen Abschnittes 4, letztere genommen bis zur Schienenauflagefläche 14 beträgt. Diese Gesamtstärke von etwa 65 mm übersteigt die Stärke üblicher Rippenplatten nur um etwa 50 mm.

Entsprechend hat die Grundplatte 11 einen Umriß, der das Kraftausleitungsteil 2, den Verbindungssteg 7, das Kraftausleitungsteil 8 und den Verbindungssteg 9 umgreift und dem Umriß üblicher Rippenplatten entspricht. Um die Kraftmeßvorrichtung 10 wie eine Rippenplatte auf einer Schwelle fixieren zu können, besitzen die Kraftausleitungsteile 2 und 3 als Verankerungselemente je ein Paar von Durchgangsbohrungen 21, 23 und 27, 29 in ihrem vom überhängenden oberen Abschnitt 4 freien Teil, deren jeweilige lichte Weite, Lage und wechselseitiger Abstand die gewünschte vereinfachte Fixierung (etwa durch übliche Gewindebolzen) auf einer Schwelle ermöglichen.

Die soweit beschriebene Kraftmeßvorrichtung 10 läßt sich auf einfache Weise aus einem Metallblock durch Fräsen und/oder Bohren herstellen. So wird der Zugang zu dem elektromechanischen Wandler 24 sowie zum entsprechenden Wandler am gegenüberliegenden Verformungskörper durch Einbringen einer erweiterten Blindbohrung 32 von unten zwischen unterem Abschnitt 6 und Kraftausleitungsteil 2 möglich. Eine entsprechende erweiterte Blindbohrung 33 von unten ist zur Schaffung der Wandler an den Verformungskörpem 26 und 28 vorgesehen. Für das Herausführen elektrischer Signalleitungen von den Wandlern nach außen ist eine Blind-Langbohrungen 31 etwa von der Mitte der Schmalseite des Kraftausleitungsteils 2 her durch das Innere desselben sowie durch das Innere des unteren Abschnittes 6 bis zur erweiterten Blindbohrung 33 getrieben.

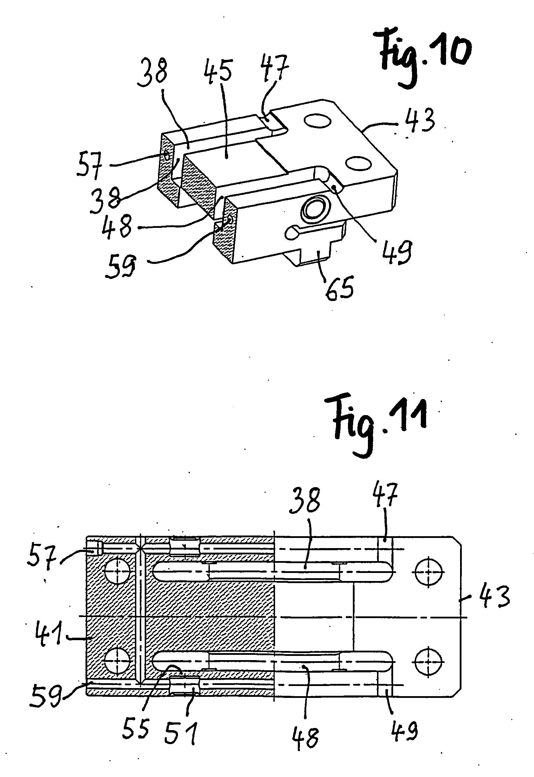

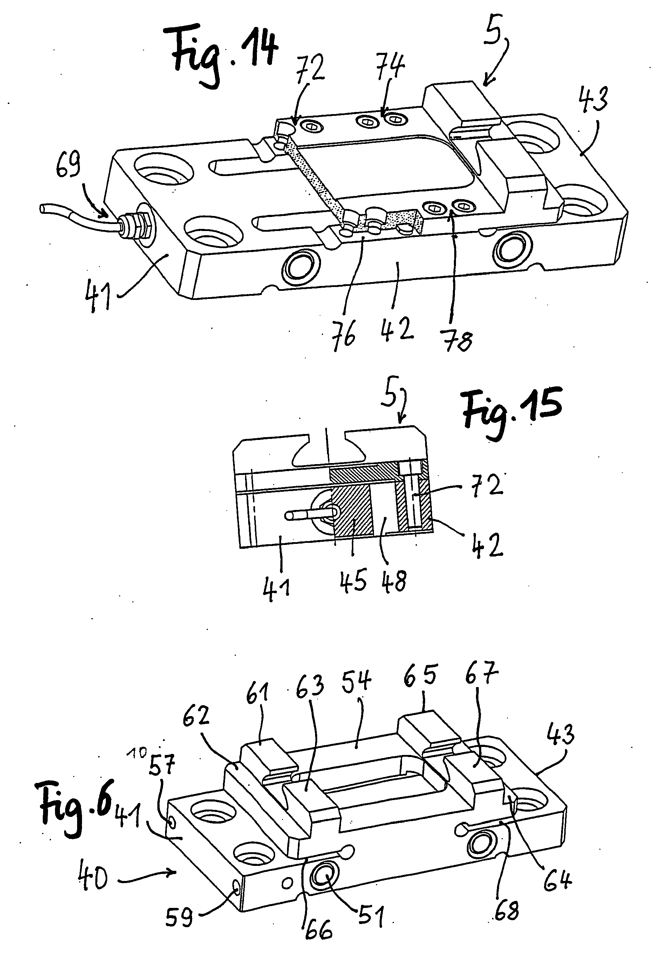

Die Kraftmeßvorrichtung 40 gemäß einer zweiten Ausführungsform der Erfindung, die in den Figuren 6 bis 11 dargestellt ist, unterscheidet sich von der vorstehend beschriebenen ersten Ausführung hauptsächlich dadurch, dass der untere Abschnitt 6 in zwei Stege 42, 44 aufgeteilt ist, welche sich parallel zueinander mit Abstand erstrecken, gleich lang sind und das erste Kraftausleitungsteil 41 mit dem zweiten Kraftausleitungsteil 43 längs den gegenüberliegenden Längsseiten der Kraftmeßvorrichtung 40 verbinden. Der Abstand zwischen den beiden Stegen 42, 44 wird im Wesentlichen durch ein massives Verbindungsteil 45 ausgefüllt, welches zum Steg 42 eine Langnut 38 und zum Steg 44 eine Langnut 48 läßt. Die beiden Langnuten 38 und 48 entsprechen in Form, Tiefe und Länge den Langnuten 8 und 18. Das mittige Verbindungsstück 45 tritt in seiner Funktion ersichtlich an die Stelle der Verbindungsstege 7 und 9 bei der ersten Ausführungsform und verbindet die beiden Kraftausleitungsteile 41 und 43 miteinander.

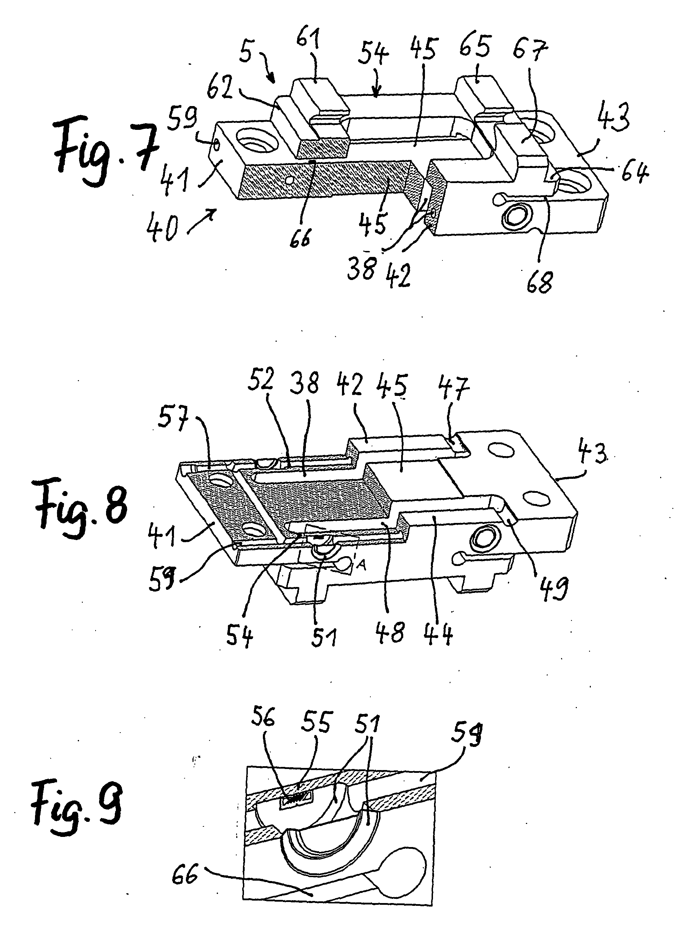

Die Stege 42, 44 entsprechen funktional dem unteren Abschnitt 6 bei dem ersten Ausführungsbeispiel und sind daher mit dem oberen Abschnitt des Krafteinleitungsteils 5 fest verbunden, und zwar sind sie im vorliegenden Beispiel mit letzterem einteilig. Nahe den Kraftausleitungsteilen 41, 43 gehen die Stege in Verformungskörper über, von denen in Figur 8 nur diejenigen Verformungskörper 52, 54 zu erkennen sind, die die Stege 42, 44 mit dem Kraftausleitungsteil 42 verbinden. Entsprechende Verformungskörper sind nahe dem Kraftausleitungsteil 43 ausgebildet. Durch Einbringen je einer Blindbohrung von außen in jeden Verformungskörper, besonders gut zu sehen in Figur 9 anhand der Blindbohrung 51, ist in dem Verformungskörper einer dünner Wandabschnitt 55 geschaffen, auf dessen Außenseite ein elektromechanischer Wandler 56 der oben beschriebenen Art aufgebracht ist. Eine an den Wandler 56 anzuschließende elektrische Signalleitung, die nicht dargestellt ist, kann entweder von außen durch die Blindbohrung 51 oder über eine Langbohrung 59 an den Wandler 56 herangeführt werden, welche von der Stirnseite des Kraftausleitungsteils 41 ausgehend so weit durch dasselbe und den Steg 44 getrieben ist, dass sie auch an denjenigen Wandler herangeführt werden kann, der sich zwischen dem Steg 44 und dem Kraftausleitungsteil 43 befindet. Eine entsprechende Langbohrung 57 ist längs der gegenüberliegenden Langseite des Kraftausleitungsteils 41 und den Steg 42 vorgesehen.

Der obere Abschnitt des Krafteinleitungsteils 5 weist eine zu einem rechteckigen Ring 54 geformte Platte mit planer Oberseite auf, auf welche ein Schienenfuß aufgesetzt und durch geeignete Befestigungsmittel verankert werden kann. Der Ring 54 umgibt eine Öffnung über dem Verbindungsstück 45. Aus der Oberseite des Ringes 54 stehen wie bei der ersten Ausführungsform vier beabstandete Böcke 61, 63, 65, 67 als Befestigungsmittel für eine Schiene vor. Die parallel zu den Kraftausleitungsteilen 41, 43 liegenden kurzen Balken 62, 64 des Ringes 54 halten vermöge je eines Schlitzes 66, 68 vertikalen Abstand zu den Oberseiten der Kraftausleitungsteile 42, 43 und den Verformungskörpem, überdecken jedoch nicht die auch hier vorgesehenen Durchgangsbohrungen, wie deutlich Figuren 7 und 8 zeigen. Im Übrigen entspricht der Umriß, der die Kraftausleitungsteile 41, 43 sowie die Stege 42, 44 umschließt auch bei dem zweiten Ausführungsbeispiel demjenigen einer üblichen Rippenplatte mit den geeignet angeordneten und ausgebildeten Durchgangsbohrungen zur Verankerung auf einer Schwelle.

Das dritte Ausführungsbeispiel der erfindungsgemäßen Kraftmeßvorrichtung unterscheidet sich von dem zweiten im Wesentlichen lediglich dadurch, dass der obere Abschnitt des Krafteinleitungsteils 5 mit den beiden Stegen 42, 44 lösbar, das heißt mittels vier Schraubenpaaren 72, 74, 76, 78 verbunden ist. Figur 15 zeigt im Teilschnitt eine der Schrauben 72. Figur 14 entnimmt man die Herausführung 69 der elektrischen Signalleitungen aus einer im Übrigen mit einem Stopfen verschlossenen Langbohrung.

## Patentansprüche

1. Kraftmeßvorrichtung mit einem Krafteinleitungsteil (5), welches über Verformungskörper (20, 26, 28) mit wenigstens einem Kraftausleitungsteil (2, 3; 41, 43) verbunden ist, wobei das Krafteinleitungsteil an einem oberen Abschnitt (4; 54) mit Mitteln (13, 15, 17, 19) zum Festlegen eines Kraftgebers versehen ist und das Kraftausleitungsteil Verankerungselemente (21, 23, 27, 29) zum Verankern auf einem Untergrund aufweist, **dadurch gekennzeichnet, dass** neben einem unteren Abschnitt (6, 42, 44) des Krafteinleitungsteils zwei Kraftausleitungsteile vorgesehen sind, und zwar an jeder von zwei gegenüberliegenden Seiten des unteren Abschnittes je ein Kraftausleitungsteil, wobei jedes Kraftausleitungsteil über zwei parallele und seitlich beabstandete Verformungskörper mit dem unteren Abschnitt sowie durch ein massives Verbindungsstück (7, 9, 45) mit dem gegenüberliegenden Kraftausleitungsteil verbunden ist.

2. Vorrichtung nach Anspruch 1 **dadurch gekennzeichnet, dass** das Verbindungsstück sich mit seitlichem Abstand neben dem unteren Abschnitt erstreckt.

3. Vorrichtung nach Anspruch 1 oder 2, **dadurch gekennzeichnet, dass** das Verbindungsstück zwei massive Verbindungsstege (7, 9) aufweist, zwischen denen sich der untere Abschnitt mit seitlichem Abstand erstreckt

4. Vorrichtung nach Anspruch 1 oder 2, **dadurch gekennzeichnet, dass** der untere Abschnitt zweiteilig ist, wobei die beiden Teile (42, 44) mit den Kraftausleitungsteilen über die Verformungskörper verbunden sind und das Verbindungsstück seitlich mit Abstand umgeben.

5. Vorrichtung nach einem der vorstehenden Ansprüche, **dadurch gekennzeichnet, dass** der die Kraftausleitungsteile umgreifende Umriß demjenigen einer üblichen Rippenplatte entspricht

6. Vorrichtung nach einem der vorstehenden Ansprüche, **dadurch gekennzeichnet, dass** ihre Höhe diejenige einer üblichen Rippenplatte nur um etwa 50 mm übersteigt.

7. Vorrichtung nach einem der vorstehenden Ansprüche, **dadurch gekennzeichnet, dass** der obere Abschnitt des Krafteinleitungsteils (5) mit dem unteren Abschnitt (6) lösbar verbunden, insbesondere verbolzt ist.

8. Vorrichtung nach einem der vorstehenden Ansprüche, **dadurch gekennzeichnet, dass** der untere Abschnitt mit den Verformungskörpem und Kraftausleitungsteilen aus einem einzigen Stahlblock herausgearbeitet ist

9. Vorrichtung nach einem der Ansprüche 1 bis 6 oder 8, **dadurch gekennzeichnet, dass** sie aus einem einzigen Stahlblock hergestellt ist.
